# EUROPEAN PATENT APPLICATION

(11) **EP 4 790 608 A1**
(43) Date of publication of application: **12.08.2026**
(21) Application number: 25156678.2
(22) Date of filing: 07.02.2025
(51) Int. Cl.: G06Q 10/04, G06F 9/48, G06F 11/34, G06Q 10/10

(54) **SCHEDULING MAINTENANCE IN A COMPUTER SYSTEM**

(71) Applicant: SAP SE, 69190 Walldorf (DE)
(72) Inventor: KREBS, Rouven, D-69190 Walldorf (DE); ROHDE, Lena, D-69190 Walldorf (DE); KOENIG, Steffen, D-69190 Walldorf (DE)
(74) Representative: DeltaPatents B.V.

(57) **Abstract**

Some embodiments are directed scheduling maintenance in a computer system. This may include calculating for future time frame, a risk factor indicative of a likelihood of violation of one or more predefined system performance requirements, the risk factor being based on a predicted quantitative compliance metric and on an estimated impact of the proposed maintenance activity.

## Description

### TECHNICAL FIELD

The presently disclosed subject matter relates to a method for scheduling maintenance in a computer system, a system for scheduling maintenance in a computer system, a computer-readable media.

### BACKGROUND

Existing solutions for scheduling maintenance in a computer system focus on monitoring system performance and alerting operators when a Service Level Agreement (SLA), e.g., a predefined performance requirement, is violated. Some solutions do not wait until the violation occurs, but warn when a violation is about to occur in the near future.

The inventors realized that an important risk factor for meeting predefined performance requirements is maintenance of the computer system. Even planned maintenance, e.g., updating hardware, such as changing a disk in a RAID array, patching software, or updating configuration, that is not supposed to interrupt service, may nevertheless reduce the performance of a computer system. In practice it may happen that normal workload in addition to reduced performance induced by maintenance causes a performance requirement violation.

Existing solutions do not take into account the impact maintenance operations can have on systems. Accordingly, at present compute system operators must rely on their own judgment to determine the best time for system maintenance. Operators must manually interpret the data and make decisions, which can lead to errors and inefficiencies. It is desirable to improve this situation.

### SUMMARY

It would be advantageous to have an improved method and system for improving scheduling of maintenance in a computer system. A method for scheduling maintenance, and a system for scheduling maintenance are defined in the accompanying claims. Specific embodiments are set forth in the dependent claims.

In an embodiment, a risk factor indicative of a likelihood of violation of one or more predefined system performance requirements is calculated for a plurality of future time frames. The risk factor is based on a predicted quantitative compliance metric and on an estimated impact of the proposed maintenance activity.

The quantitative compliance metric may be indicating compliance with the one or more predefined system performance requirements, and may be predicted from historic performance metric data. The historic performance metric data may be obtained by monitoring the performance metrics of the computer system

The estimated impact of the proposed maintenance activity may be estimated fort the plurality of future time frames. In an embodiment, the estimated impact of the proposed maintenance activity may be estimated as equal for each of the plurality of future time frames.

A selected time frame for performing the maintenance activity may be obtained based on the risk factors, e.g., by combining them first into a combined risk factor. The maintenance activity may then be initiated in the selected time frame.

Interestingly, potential high-risk times for performance requirement violations as well as the impact of a maintenance activity for a certain performance requirement. Accordingly, a more comprehensive, data-driven, and automated approach to system maintenance scheduling is obtained. For example, an embodiment may be employed by SaaS providers, helping them balance the need for regular system maintenance with the obligation to uphold performance requirement and minimize business impact for users of the computer system.

An advantage of the embodiments is that no detailed knowledge of the inner workings of operating system scheduling or of workloads of the computer system is needed, as the method can adapt to any environment. Furthermore, prediction of future compliance and impact of maintenance can be predicted using different methods. This is advantageous as compliance can be well modelled using time series prediction, while maintenance impact can be well modelled using regression.

A aspect is a method for scheduling maintenance. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer-readable medium for performing an embodiment of the method when said program product is executed on a computer. For example, a computer readable medium may be a computer readable storage medium.

In an embodiment, the computer program comprises computer program code adapted to perform all or part of the steps of an embodiment of the method when the computer program is run on a computer. Preferably, the computer program is embodied on a computer-readable medium.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a computer system with scheduled maintenance,
Figure 1b schematically shows an example of an embodiment of a computer system with scheduled maintenance,
Figure 2a schematically shows an example of an embodiment of a maintenance scheduling system,
Figure 2b schematically shows an example of an embodiment of a maintenance scheduling system,
Figure 3a schematically shows an example of an embodiment of predicted quantitative compliance metrics,
Figure 3b schematically shows an example of an embodiment of impact estimates,
Figure 3c schematically shows an example of an embodiment of risk factors,
Figure 3d schematically shows an example of an embodiment of combined risk factors,
Figure 4 schematically shows an example of an embodiment of a method for scheduling maintenance in a computer system,
Figure 5a schematically shows a computer-readable medium having a writable part comprising a computer program according to an embodiment,
Figure 5b schematically shows a representation of a processor system according to an embodiment.

### Reference signs list

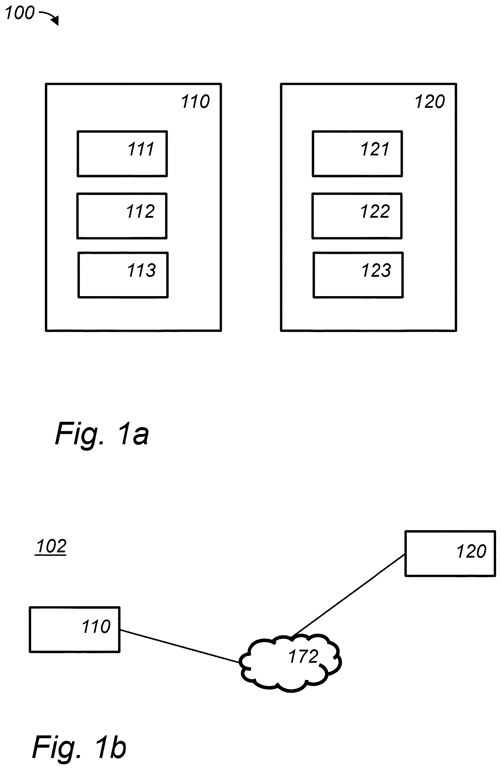

The following list of references and abbreviations corresponds to Figures 1a-3d, 5a-5b and is provided for facilitating the interpretation of the drawings and shall not be construed as limiting the claims.
- 100, 102: a computer system with scheduled maintenance
- 110: a maintenance scheduler
- 120: a computer system
- 111, 121: a processor system
- 112, 122: storage
- 113, 123: communication interface
- 172: a computer network
- 200: a maintenance scheduler
- 201: a computer system with scheduled maintenance
- 210: a computer system
- 220: a performance metrics monitor
- 230: a compliance predictor
- 240: a maintenance impact estimator
- 250: maintenance risk evaluator
- 260: a maintenance handler
- 301: predicted quantitative compliance metrics
- 302: impact estimates
- 303: risk factors

- 310, 320, 330: a time frame
- 31, 32, 33: a predefined system performance requirement
- 311-333: a quantitative compliance metric
- 341-343: an impact of a proposed maintenance activity
- 314-336: a risk factor
- 34: combined risk factors
- 317-337: a combined risk factor

- 1000, 1001: a computer-readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible to embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only but also includes every other combination of features described herein or recited in mutually different dependent claims.

An important aspect of offering software services, e.g., as in a cloud computing system, e.g., as in a Software as a Service (SaaS) system, is meeting predefined system performance requirements. The predefined system performance requirements are often defined in a Service Level Agreement (SLA), which defines the level of service that a user of the system can expect from the computer system. Predefined system performance requirements may also arise from technical considerations regarding reliability, availability, and performance of the computer system. Violating the predefined system performance requirements may lead to failure or a reduced quality of applications running on the computer system.

On the other hand, even though predefined system performance requirements should be met, nevertheless, the software will still need to be maintained. These activities, while in themselves important for the long-term performance and longevity of the system, could lead to downtimes or reduced performance during execution. For SaaS providers, this presents a paradoxical situation. On one hand, they need to perform regular maintenance to ensure the system is running smoothly, but on the other, they need to minimize, e.g., downtime or performance issues, to uphold predefined system performance requirements.

Adding to this complexity is the fact that an average operator in charge of triggering these maintenance activities may lack the specific knowledge of when the impact on a client's activities on the computer system is greatest. There is a clear need to assist these operators in deciding the best time for maintenance activities-a time that will cause less, preferably the least, disruption to the user of the computer system and have the least impact on the SLA. These conflicting goals present a significant challenge for operators of computer systems. There is a clear need for a solution that can balance the need for regular system maintenance with the obligation to uphold predefined system performance requirements and minimize impact on users of the computer system.

**Figure 1a** schematically shows an example of an embodiment of a maintenance scheduler 110 and of an embodiment of a computer system 120. Maintenance scheduler 110 and computer system 120 may be part of a system 100.

Computer system 120 may be configured to run one or more computer applications. In particular, applications that are designed to run for a long time, e.g., are in principle always on, and would preferably never be interrupted. Examples of such applications include high-availability systems like enterprise database servers, distributed computing platforms (e.g., Apache Hadoop), and critical real-time systems (e.g., air traffic control systems or financial trading platforms). These are often referred to as "always-on" systems or "high-availability" systems.

For example, system 120 may run one or more databases. For example, system 120 may run a DBaaS platform. DBaaS, or Database-as-a-Service, refers to a cloud-based service model where databases are hosted and managed by a service provider, allowing users to interact with the database without worrying about hardware, storage, backups, or scaling. Examples of DBaaS platforms include Amazon RDS, Google Cloud SQL, and Microsoft Azure SQL Database. DBaaS services often provide automatic scaling, high availability, and built-in security measures, which are particularly attractive for businesses requiring minimal database management overhead.

Computer system 120 may be configured for cloud computing services. Computer system 120 may be configured for multitenancy. Multitenancy is a feature in many types of cloud computing services, where a service provider can support multiple clients of different customers (called "tenants") within a cloud solution. In a database-as-a-service (DBaaS) environment, multitenancy means that the cloud solution can support multiple users accessing multiple databases from multiple tenants, and each tenant can have one or more databases. Users can be grouped into the multiple tenants, where users of a tenant can share a common access with certain specific privileges to the DBaaS instances. Users who consume services do not need to manage the availability of resources or capacity-related issues (e.g., CPU consumption, storage consumption, backup service consumption, network bandwidth consumption, etc.). Instead, such tasks are managed by DBaaS service providers. Thus, a cloud service supported by DBaaS can be attractive to end users because it can offer benefits of low maintenance cost, overall reliability, high elasticity, etc.

For example, computer system 120 may be configured to receive sensor data from a plurality of devices, wherein each device of the plurality of devices comprises one or more hardware sensors, and store the received sensor data in a database, possibly after annotation. For example, multiple IoT devices may include temperature sensors, pressure sensors, positional sensors, and the like. Measurements of the multiple IoT devices' sensors may be stored by computer system 120. These measurements may also be annotated with metadata such as timestamps, device IDs, and contextual information (e.g., location data).

For example, computer system 120 may be configured as a file server, e.g., storing and providing files upon request, e.g., through a computer network. For example, computer system 120 may be configured to perform computations, e.g., repeated computations. For example, computer system 120 may be configured to perform logistic calculations, e.g., computing optimal routes for vehicles.

Different types of computer maintenance can have varying levels of impact on applications running on the system. Note that maintenance activities may not completely stop applications but instead they may only temporarily reduce their capacity or performance. For example, a rolling restart of system components allows the system to remain operational by restarting individual components sequentially. This may reduce performance, e.g., it may reduce the number of supported users during the maintenance process; nevertheless, the number of supported users may well remain positive. Software updates, such as patching, may lead to brief moments of reduced responsiveness as updated modules are swapped in. Hardware replacements, like replacing a failing disk in a RAID array, can cause temporary degradation in performance due to increased load on the remaining hardware. Configuration changes, such as adjusting resource allocation policies, may momentarily impact application throughput. Database optimizations, such as re-indexing or query plan adjustments, can improve long-term performance but may cause short-term slowdowns as the optimizations are applied. These types of maintenance are important for long-term reliability and efficiency of the system but reduce performance in the short term.

Maintenance scheduler 110 is configured to schedule maintenance in computer system 120. In particular, the method is configured to improve adherence to one or more predefined system performance requirements. Such performance requirements are often defined in service level agreements (SLAs), e.g., between operators of computer system 120 and its clients, such as users of applications running on computer system 120. Performance requirements may also have other technical origins, such as ensuring compliance with real-time processing limits or handling worst-case scenarios for specific input loads.

Performing a maintenance activity, e.g., a restart, a patch, or similar actions, at an inopportune moment may reduce performance to such an extent that the performance requirements are no longer met.

Maintenance scheduler 110 determines preferred time frames for performing maintenance by combining information from two sources. On the one hand, historic performance metrics of the computer system are used to estimate how well the predefined system performance requirements will be met in the future. This compliance is expressed in a quantitative compliance metric. For example, the quantitative compliance metric may be a value indicating proximity to the performance requirements. If a system must support 1,000 users and currently has only 10 users, the compliance metric reflects ample capacity. Conversely, supporting 900 users indicates proximity to the limit, meaning any reduction in performance could lead to a violation. This metric is computed for a number of future time frames. In this case, the quantitative compliance metric may be expressed as a number between 0 and 1, e.g., the ratio between the predicted number of users and the number of users in the performance requirement. The values may be clipped at 1, e.g., min(1, x).

The other source of information considered by maintenance scheduler 110 is an estimate of the impact of a proposed maintenance activity on the quantitative compliance metric for the plurality of future time frames. By combining the predicted quantitative compliance metric and the estimated impact of the proposed maintenance activity, a risk factor can be calculated that indicates a likelihood of violation of each of the one or more predefined system performance requirements. In other words, if at some future time the system is far away from the predefined system performance requirements-that is, at a moment when performance could become a lot worse before the predefined system performance requirements are violated, even when taking into account how the performance could become worse as a result of said maintenance-those are good moments when maintenance is preferably done.

Finally, for each future time frame, a combined risk factor may be computed from the risk factor associated with the one or more predefined system performance requirements. A preferred time frame for performing maintenance may be selected from the future time frames based on the combined risk factors.

While it is theoretically possible to model the capacity of the computer system by accounting for all tenants' activities, as well as the operating system's algorithms for scheduling resources among tenants and their applications, such an approach would be exceedingly complex. Accurately simulating the interactions between multiple tenants, their varying workloads, and the intricate scheduling policies of the operating system requires a level of information and computational effort that is impractical for real-world applications. Moreover, the inherent variability in tenant activity and resource demands makes such models not only computationally expensive but also difficult to maintain.

In contrast, the method of the present invention offers a more practical and effective approach. Rather than attempting to precisely predict the intricate details of how every aspect of the system interacts, the invention focuses on identifying time frames where maintenance can be performed with reduced risk of violating predefined system performance requirements. By simplifying the problem to focus on identifying good moments for maintenance rather than achieving absolute predictive accuracy of performance indicators, the invention reduces complexity while still allowing the selection of good future time frames in which to schedule maintenance.

Additionally, maintenance activities are inevitable in the lifecycle of any computer system, whether due to necessary patches, updates, or hardware adjustments. Therefore, the goal is not to model the precise impact of every maintenance action on performance indicators, but rather to predict sufficiently well when these activities can be executed with minimal disruption to system performance.

Maintenance scheduler 110 may comprise a processor system 111, a storage 112, and a communication interface 113. Computer system 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Maintenance scheduler 110 and computer system 120 are represented here as single devices, though either one, or both, could just as well be implemented as systems, e.g., a geographically distributed system, e.g., a cloud computing system, e.g., a system comprising multiple computers. Further, any one of maintenance scheduler 110 and computer system 120 could be implemented as a process running on a computer, e.g., a cloud computing system.

Maintenance scheduler 110 and computer system 120 are represented here as separate devices or systems, though in a typical example maintenance scheduler 110 would be implemented on computer system 120.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power such as a volatile memory device, e.g., a Random Access Memory (RAM). For example, storage 112 and/or 122 may store data in the presence of power as well as outside the presence of power such as a non-volatile memory device, e.g., Flash memory. Storage may comprise a volatile writable part, say a RAM, and/or a non-volatile writable part, e.g., Flash. Storage may comprise a non-volatile non-writable part, e.g., ROM, e.g., storing part of the software.

Computer system 120 may have access to a database. The database may comprise information of various kinds, e.g., information relating to applications running on computer system 120, e.g., sensor values, e.g., relating to an IoT application, and so on.

Devices 110 and 120 may communicate internally, with each other, with other devices, external storage, input devices, output devices, and/or one or more sensors over a computer network. The computer network may be an internet, an intranet, a LAN, a WLAN, a WAN, etc. The computer network may be the Internet. Devices 110 and 120 may comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G, or 5G antenna.

Communication interface 113 may be used to send or receive digital data, e.g., commands to initiate maintenance activities, compliance metrics, risk factors, or other performance-related data. Communication interface 123 may be used to send or receive digital data, e.g., historic performance metrics, predicted compliance metrics, maintenance impact estimates, or system status updates. Maintenance scheduler 110 and computer system 120 may have a user interface, which may include well-known elements such as one or more buttons, a keyboard, a display, a touch screen, etc. The user interface may be arranged for accommodating user interaction for performing configuration tasks, initiating maintenance operations, monitoring system performance, or providing input regarding predefined performance requirements.

The execution of devices 110 and 120 may be implemented in a processor system. Devices 110 and 120 may comprise functional units to implement aspects of embodiments. The functional units may be part of the processor system. For example, functional units shown herein may be wholly or partially implemented in computer instructions stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, maintenance scheduler 110 and computer system 120 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, devices 110 and 120 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, maintenance scheduler 110 and computer system 120 may comprise circuits, e.g., for cryptographic processing, and/or arithmetic processing.

In hybrid embodiments, functional units are implemented partially in hardware, e.g., as coprocessors, e.g., arithmetical coprocessors, and partially in software stored and executed on the device.

**Figure 1b** schematically shows an example of an embodiment of computer system 102 with scheduled maintenance. System 102 may comprise a maintenance scheduler 110 and one or more computer systems; shown is computer system 120. The devices and systems are connected through a computer network 172, e.g., the Internet. Maintenance scheduler 110 and computer system 120 may be according to an embodiment.

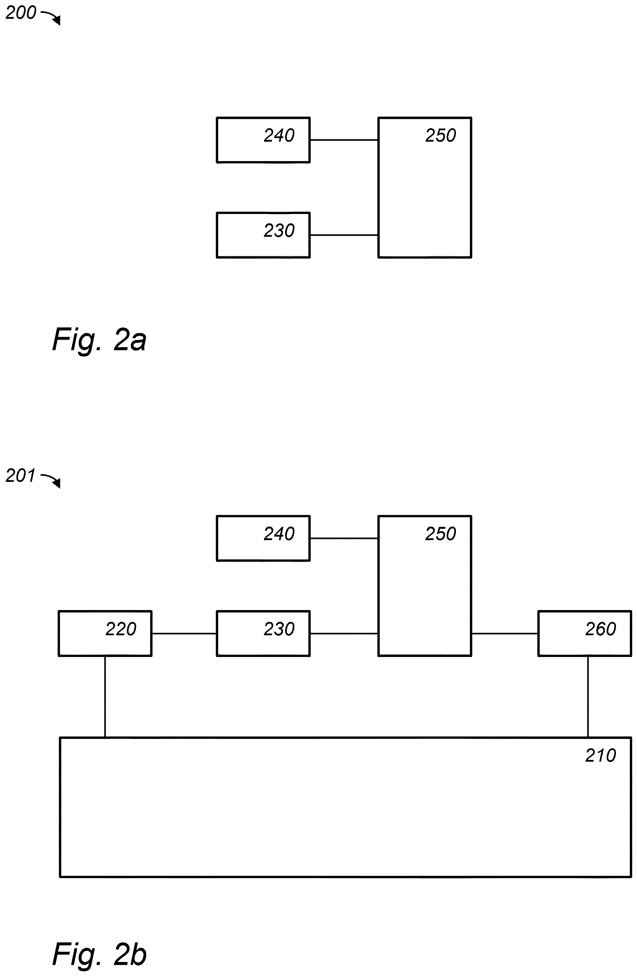

**Figure 2a** schematically shows an example of an embodiment of a maintenance scheduler 200, e.g., a maintenance scheduling system. Maintenance scheduler 200 may be implemented on maintenance scheduler 110.

System 200 uses a computer-implemented algorithm to schedule maintenance in a computer system to improve adherence to one or more predefined system performance requirements.

Typically, the predefined system performance requirements are obtained from one or more Service Level Agreements (SLA). This is not necessarily the case, though. For example, predefined system performance requirements may result from a technical analysis of which system performance is required, e.g., to support a particular technical use case, e.g., a real-time response, support a particular flow of database transactions, and the like. Examples of predefined system performance requirements include: response times, throughput targets, supported users, etc.

System 200 comprises a compliance predictor 230, a maintenance impact estimator 240, and a maintenance risk evaluator 250. Compliance predictor 230 is configured for predicting from historic performance metric data, for a plurality of future time frames, a quantitative compliance metric indicating compliance with one or more predefined system performance requirements. Maintenance impact estimator 240 is configured for estimating an impact of a proposed maintenance activity on the quantitative compliance metric for the plurality of future time frames. Maintenance risk evaluator 250 is configured to compute a combined risk factor for future time frames, which may then be used to obtain a selected time frame in which the maintenance can be initiated.

Time frames refer to defined periods of time during which system performance metrics are analyzed or maintenance activities may be planned. Time frames may represent consecutive periods, but this is not necessary. Typically the time frames do not overlap, although this also is not necessary. For example, a day may be divided into three 8-hour periods, such as 0:00-8:00, 8:00-16:00, and 16:00-0:00, or into shorter intervals, such as one-hour periods. Preferably, there are at least two or more time frames per day, and more preferably three or more time frames to allow for finer granularity in predicting compliance metrics and scheduling maintenance activities.

System 200 obtains performance metrics of the computer system, the performance metrics being associated with the one or more predefined system performance requirements, thus obtaining historic performance metric data. For example, a typical performance requirement is that an associated performance metric complies with a threshold, e.g., is above or below the threshold as appropriate-for example, response time should be below a response time threshold. For example, a performance requirement is that an associated performance metric is supported, so long as it complies with a threshold, e.g., is above or below the threshold as appropriate-for example, so long as the number of active users is less than an active users threshold, then this number should be supported.

Examples of performance metrics include: CPU utilization, number of business transactions in some time period, e.g., per minute, response times, e.g., latency thresholds, active user sessions, and request queue lengths.

Note that CPU utilization is typically not specified in an SLA, yet keeping track of it, aiming to perform maintenance when it is low, may nevertheless positively impact other performance requirements, e.g., minimum number of supported users, transactions, response time, and the like.

System 200 may cooperate with, and may even be integrated into, the computer system. **Figure 2b** schematically shows an example of an embodiment 201 of a computer system 210 with scheduled maintenance. In addition to the maintenance scheduler 200, system 201 comprises the computer system 210, a performance metrics monitor 220, and a maintenance handler 260.

Performance metrics monitor 220 is configured for monitoring performance metrics of the computer system. The performance metrics are associated with the one or more predefined system performance requirements. In this way, historic performance metric data is obtained. Typically, the predefined system performance requirements are directly monitored. For example, if the predefined system performance requirement is to support at least 1000 users, then the number of users currently active may be monitored. For example, if the predefined system performance requirement is to have a maximum response time of 2 seconds, then the current response time may be monitored. In addition to the predefined system performance requirements, other performance measures may be monitored.

Performance metrics monitor 220 and/or maintenance handler 260 may be integrated with maintenance scheduler 200. Performance metrics monitor 220, maintenance handler 260, and/or maintenance scheduler 200 may be integrated with computer system 210.

The computer system, e.g., system 210, may be a multitenant system. For example, the computer system may comprise a plurality of operational subsystems. Each operational subsystem may be configured to execute a plurality of applications. Nevertheless, an embodiment of the maintenance scheduler may advantageously be applied to only one, or a subset of, the plurality of operational subsystems.

Monitoring performance metrics may comprise collecting real-time data from one or more system components using sensors or monitoring software.

Maintenance handler 260 is configured to perform maintenance activity. In an embodiment, maintenance handler 260 performs the maintenance activity in a time frame selected through an embodiment. For example, the maintenance activity may comprise one or more of: a rolling restart of system components, software updates, hardware replacements, configuration changes, or database optimizations.

For example, maintenance activities may include replacing a failed disk in a RAID array supporting a shared database storage, patching database management software, e.g., to address security vulnerabilities, upgrading hardware nodes to improve overall system performance, reconfiguring tenant resource allocations to balance workloads across nodes, or optimizing database indices and query plans for more efficient operations. Additionally, activities such as updating API endpoints used by tenants or migrating tenant data to higher-performance storage tiers may also be performed as part of maintenance.

In an embodiment, a predictive analytics system is incorporated into the existing landscape management solution used by operators to manage and execute maintenance tasks, e.g., handler 260. Historical and optionally real-time usage data may be analyzed to estimate the potential impact of system maintenance activities. This integration supports optimized system maintenance by identifying time frames that reduce unnecessary disruptions, improving reliable and high-performing systems. Adherence to predefined system performance requirements, such as those specified in SLAs, is improved.

Embodiments are flexible as they can accommodate various levels of data, support a wide range of maintenance activities, and differing performance requirements. By adapting to the needs of specific (sub)systems and use cases, the predictive analytics system remains effective yet low-weight. No in depth knowledge of the computer system is required, such as details of operating system scheduling mechanics.

Below an outline is provided of how maintenance scheduling may be performed. In an embodiment, two predictions are made, on the basis of which an advantageous future time frame may be selected for maintenance.

### Quantitative Compliance Metric

In an embodiment, a prediction is made, e.g., by compliance predictor 230, for a plurality of future time frames, a quantitative compliance metric indicating compliance with the one or more predefined system performance requirements. This prediction is made on the basis of the historic performance metric data.

Compliance metric expresses how dangerous the situation is, e.g., how close the system is to a violation of a performance requirement. A quantitative compliance metric may be defined such that higher values are closer to a violation than lower values, or the other way around. The distinction is arbitrary and may even be different for different compliance metrics. As an example, one may define a compliance metric so that values above 1 indicate a violation, values below 1 are compliant, and/or so that higher values are worse in the sense that the violation is worse, and lower values are better in the sense that the situation is less likely to lead to a violation as the metric is far from the threshold.

For example, some performance requirements are of the form that a measurable performance metric should be above or below some threshold. Examples of such performance requirements include: response times, e.g., latency thresholds, CPU utilization, and request queue lengths.

For example, if a performance metric x should stay below some value, e.g., *x < b.* Then the compliance metric may be *x*/*b,* or *x - b +* 1. For example, if a performance metric *x* should stay above some value, e.g., *x* > *a.* Then the compliance metric may be*-x*/*a* + 2, or -*x +* 1 *+ a.* Various formulas are possible though, e.g., polynomial or rational functions, etc.

For example, some performance requirements are of the form that at least some number should be supported. Examples of such performance requirements include: supported users, e.g., active user sessions, throughput targets, e.g., the number of transactions in some time period, e.g., per minute, e.g., database transactions, e.g., reading, writing, updating, or deleting data in the database. In this case the compliance metric could quantify the distance between a current number and the target. For example, if at least *a* of some measurable computer activity or object should be supported, and the current number is *x,* then the compliance metric may be *x*/*a,* or *x - a* + 1. The rationale here is that if a system, which is designed to support *a* currently supports far fewer, then probably the system will not run into problems if the capacity of the system is somewhat reduced by maintenance.

To predict a quantitative compliance metric, one may, for example, compute the compliance metrics in the past and extrapolate the past compliance metrics to the future. Alternatively, one could predict performance metrics, e.g., by extrapolating past performance metrics, and convert them to compliance metrics.

To extrapolate future compliance metrics from a time series of past values, various methods can be employed depending on the complexity of the system and the available data. A simple approach involves averaging corresponding time frames over historical data, such as calculating the average compliance metric for similar times of the day (e.g., averaging all mornings to estimate the compliance metric for an upcoming morning). A more advanced method might involve employing statistical techniques such as moving averages, e.g., ARMA, or exponential smoothing, which capture recent trends and smooth out noise. For systems with more intricate patterns or dependencies, machine learning models, such as ARIMA (AutoRegressive Integrated Moving Average) or SARIMA (Seasonal ARIMA), could be used to account for seasonality and trends. Additionally, deep learning models, such as recurrent neural networks (RNNs) or Long Short-Term Memory (LSTM) networks, can capture complex temporal dependencies and non-linear relationships in the time series. A similar approach may be used to predict performance metrics.

Preferably, all compliance metrics are aligned in the sense that for each metric, higher values correspond to situations that are violating or closer to violating the corresponding metric. This is convenient, though not strictly necessary, as unaligned metrics could be appropriately converted when combining.

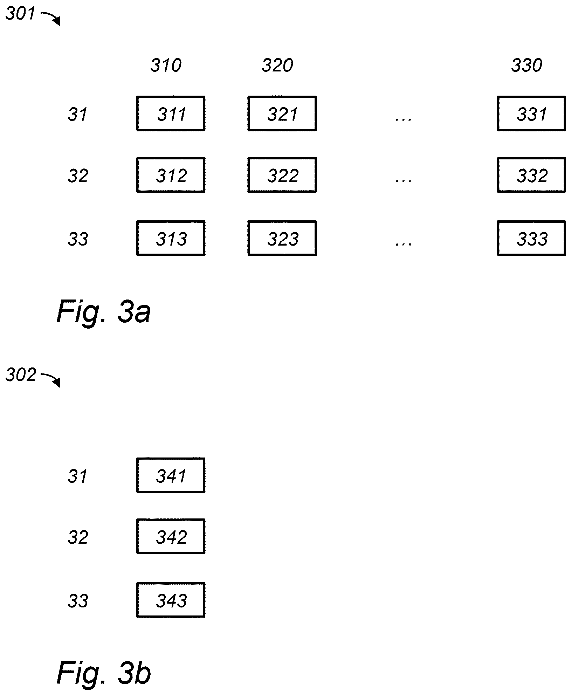

**Figure 3a** schematically shows an example of an embodiment of predicted quantitative compliance metrics 301. Shown in Figure 3a are future time frames 310, 320, 330. The future time frames may be relative time frames, e.g., morning, afternoon, night, though not for a specific morning, afternoon, or night, but any one in the future. The future time frames may be absolute time frames, e.g., morning on a specific date, afternoon on the specific date, night on the specific date, morning on the day after the specific date, etc. For example, if the prediction of a performance metric is implemented as an average of the performance metric in past time frames, e.g., the average in morning shifts in the past to predict the performance metric in a coming morning, then relative time frames are preferred, as the prediction for a following morning shift will then be the same as for the coming morning. When using more advanced prediction, e.g., an autoregressive moving-average model, then it may make sense to make different prediction for the same time frames on different days; e.g., such a model may give different prediction for the coming morning time frame, then for the morning time frame the day after.

In the example shown in figure 3a, there are three predefined system performance requirements, e.g., three requirements that the computer system should meet, preferably also during maintenance. For each of the predefined system performance requirements, and each of the time frames, the system predicts a quantitative compliance metric.

For example, Figure 3a shows for predefined system performance requirement 31, and for time frames 310-330, the predicted quantitative compliance metrics 311, 321, and 331. For example, Figure 3a shows for predefined system performance requirement 32, and for time frames 310-330, the predicted quantitative compliance metrics 312, 322, and 332, etc.

### Maintenance Impact

In an embodiment, an estimate is made, e.g., by maintenance impact estimator 240, for a plurality of future time frames, regarding the impact of a proposed maintenance activity on the quantitative compliance metric. This estimation is performed to determine how the proposed maintenance activity may affect compliance with the one or more predefined system performance requirements.

For example, the estimation may be derived based on historical data from comparable maintenance activities performed on similar computer systems.

For example, the estimation may involve simulating the maintenance activity on a virtualized replica of the computer system to observe its potential effects on performance.

The impact of the proposed maintenance activity may vary across different predefined system performance requirements. For instance, Figure 3b schematically illustrates an example embodiment of impact estimates 302, where the estimated impact is shown for a plurality of future time frames (310, 320, 330) and predefined system performance requirements (31, 32, 33). For each time frame, the maintenance impact estimator computes the estimated impact (341, 342, 343) on the quantitative compliance metric.

The estimated impacts indicate how the maintenance activity may bring the system closer to violating a performance requirement. The estimated impact is a parameter that indicates the impact, e.g., the severity of, the proposed maintenance. For example, for a given performance requirement, there may be a function *f,* such that for a compliance metric *x* and impact factor *λ*, the compliance during maintenance would be *f*(*x, λ*); The particular form of *f* depends on the precise definition of the compliance metric, for which, as indicated above, various forms are possible. A typical function may be *f*(*x, λ*) *= λx,* that is, the impact factor multiplies with the compliance. For example, assuming that higher compliance values are closer to violating, then *λ*, may be a value, typically larger than 1. More complicated functions may be used, e.g., quadratic, polynomial, rational, etc.

To predict the impact factors of a proposed maintenance activity, a practical approach would involve analyzing historical data from similar maintenance activities to estimate the likely effect on compliance metrics. A solution comprises identifying maintenance activities of the same type (e.g., software patches, RAID repairs) from historical records and calculating how compliance metrics changed immediately before and during those maintenance activities. By averaging these changes or ratios across multiple instances of the same type of maintenance, an estimate of the typical impact factor for that activity can be derived. Instead of averaging ratios, regressions analysis may be used, e.g., a plurality of pairs (*xᵢ, yᵢ*) may be collected in which *xᵢ* indicates compliance just before maintenance and *yᵢ* indicates compliance during maintenance, e.g., a set period before maintenance starts, e.g., 1 minutes or more, e.g., 10 minutes or less, and a set period after maintenance commences, e.g., at least 5 minutes after start; alternatively *yᵢ* may be worst value of the performance metric during the maintenance. The regression analysis may provide parameters, to map *xᵢ* to *yᵢ*, e.g., a *λ* as above.

A more sophisticated approach would consider additional characteristics of the maintenance activities. For example, for software patches, one could incorporate the patch size, as a variable. In this case, a plurality of tuples (*xᵢ, wᵢ, yᵢ*) may be collected in which *wᵢ* represents a metric of the maintenance activity, e.g., patch size.

Regression analysis could then be applied to model the relationship between compliance metrics without maintenance and compliance metrics during maintenance. The resulting linear (or non-linear, if needed) formula would allow for more accurate predictions of the impact based on both the type and characteristics of the maintenance activity. This method could be extended to include other contextual factors, such as the current system load, the time of day, or the level of redundancy in the affected systems, to refine the predictions further.

An interesting advantage of the model architecture is that performance metrics and/or quantitative compliance metrics may be predicted with a different model than an impact factor that maintenance has on the quantitative compliance metrics. For example, to predict performance metrics and/or quantitative compliance metrics an autoregressive model may be used, e.g., a model that uses predicted and/or measured values up to a point in time to predict the value at a next point in time, typically using a limited window of past values. On the other hand to predict the impact of maintenance on performance metrics and/or quantitative compliance metrics, one could use a regression model, e.g., predicting a function mapping values x (without maintenance) to y (with maintenance). The function, which may be a linear function, can then be applied to predicted performance metrics and/or quantitative compliance metrics. Untangling these two types of predictions turned out very helpful, maintenance has a quite predictable effect, but the amount of data is much smaller than what is available for time series based predicting.

### Risk Factors

In an embodiment, a risk factor is calculated, e.g., by a maintenance risk evaluator 250, for each future time frame and for each predefined system performance requirement. The risk factor indicates the likelihood of a violation of the predefined system performance requirement during a proposed maintenance activity. The calculation of the risk factor is based on the predicted quantitative compliance metric for the respective time frame and the estimated impact of the proposed maintenance activity. By combining these two inputs, the system can provide a comprehensive assessment of the risk associated with initiating maintenance at a given time.

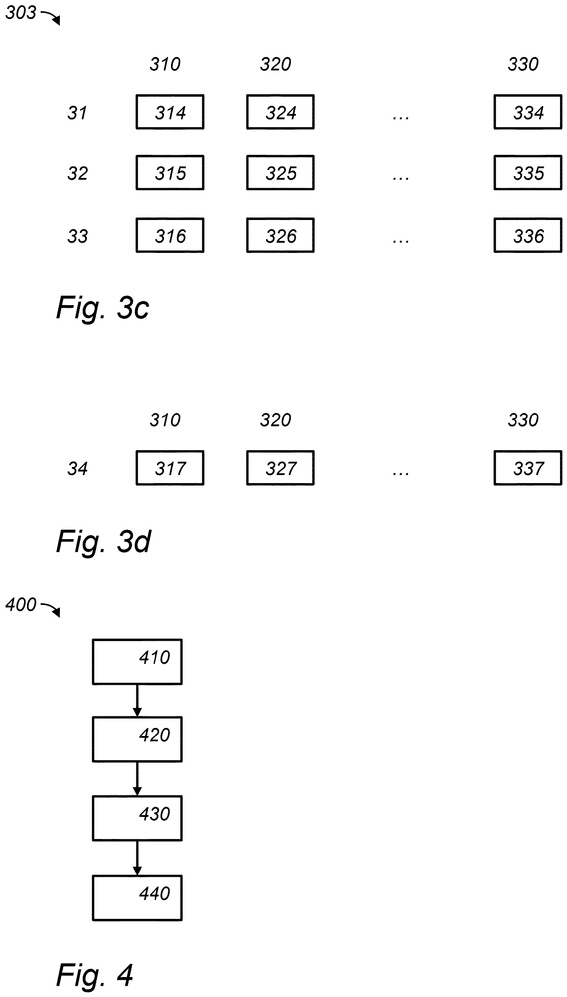

**Figure 3c** schematically illustrates an example embodiment of risk factors 303. Shown in Figure 3c are multiple future time frames (310, 320, 330) and predefined system performance requirements (31, 32, 33). For each combination of time frame and performance requirement, the system computes a risk factor; shown are risk factors 314-336. For example, for predefined system performance requirement 31 and time frames 310, 320, and 330, the calculated risk factors are 314, 324, and 334, respectively. Similarly, for predefined system performance requirement 32, the calculated risk factors are 315, 325, and 335, and so on.

The risk factor may be calculated as a function of the predicted compliance metric and the estimated impact factor. For example, a function *g*(*x*, *λ*) may be defined such that for a compliance metric *x* and an impact factor *λ*, the risk factor is *g*(*x, λ*)*.* A simple form of this function could be *g*(*x, λ*) *= λx,* where the risk factor scales with the compliance metric and the severity of the impact. More complex forms of the function may also be employed, such as polynomial, rational, or exponential functions, to account for non-linear relationships between compliance and impact.

### Combined Risk Factor

In an embodiment, a combined risk factor is computed, e.g., by maintenance risk evaluator 250, for each future time frame. The combined risk factor aggregates the individual risk factors associated with the one or more predefined system performance requirements and a future time frame, to provide an overall assessment of the risk of performing maintenance in a given time frame. This computation enables operators to evaluate and compare the total risk across multiple time frames and select the optimal time frame for maintenance activities.

The combined risk factor may be calculated as a weighted sum of the individual risk factors. For example, if there are multiple predefined system performance requirements, such as performance requirements 31, 32, and 33 in Figures 3a-3c, with corresponding risk factors r31, r32, and r33 for a given time frame, the combined risk factor R could be computed as: *R* = *w*31 × *r*31 + *w*32 × *r*32 + *w*33 × *r*33, where w31, w32, and w33 are weights that reflect the relative importance of each predefined system performance requirement. The weights may be predefined based on SLA priorities, technical analysis of requirements for a technical function such as uptime, or dynamically adjusted based on current system conditions.

**Figure 3d** schematically illustrates an example embodiment of combined risk factors 34. Shown in Figure 3d are multiple time frames (310, 320, 330) with their respective combined risk factors (317, 327, 337). For instance, for time frame 310, the combined risk factor is 317, for time frame 320, it is 327, and for time frame 330, it is 337. These combined risk factors consolidate the risks associated with all predefined system performance requirements into a single value for each time frame.

### Obtaining A Selected Time Frame And Initiating Maintenance

Finally, a selected time frame for performing the maintenance activity based on the combined risk factors. The maintenance activity is initiated in the selected time frame, e.g., by maintenance handler 260.

In an embodiment, a selected time frame for performing the maintenance activity is determined based on the combined risk factors, and the maintenance activity is initiated in that time frame, for example by a maintenance handler 260. There are various way in which the combined risk factors can be used to obtain a selected time frame, which in turn may be used to schedule the maintenance activity in.

One approach is to select the time frame with the lowest combined risk factor and initiate the maintenance activity there, or at least a time frame with a lower combined risk factor than one or more other time frames. However, different degrees of automation may be applied in using the combined risk factors.

In an embodiment, the system calculates the combined risk factors for each of the plurality of future time frames and presents the results to an operator-in whole or in part. The operator reviews these risk factors and manually decides which time frame to use. The system may or may not propose or schedule a time frame in this case. The system thus enhances decision-making by equipping operators with actionable, data-driven insights. These insights allow maintenance activities to be scheduled more efficiently and effectively, reducing the risk of adverse impact on system performance. For example, the combined risk factors may be computed and/or reported to an operator with the intent of using the combined risk factors to select a time frame for maintenance activity with reduced impact on performance requirements.

In an embodiment, the system evaluates the combined risk factors, determines a suitable time frame for maintenance, and provides this recommendation to the operator. The operator can then decide whether to approve or decline the recommendation, for example, by providing a simple confirmation such as a "yes" or "no."

In an embodiment, a selected time frame is selected automatically based on the combined risk factors with the intent of performing the maintenance activity at the selected time frame. The maintenance activity may be scheduled at the selected time frame and/or may be initiated at the selected time frame, possibly automatically. An operator may be asked for confirmation, and/or the system may allow an operator to cancel scheduled maintenance activity after it has been scheduled automatically.

Selecting a time frame for maintenance may comprise selecting a time frame with a low combined risk factor, e.g., the lowest combined risk factor, e.g., a time frame with a lower combined risk factor than one or more other time frames. However, other factors may be taken into account. For example, personal availability may be taken into account, e.g., maintenance may be preferably scheduled at a time frame with high personal availability and low combined risk factor, even if a time frame with a lower combined risk factor is available but with fewer available personnel.

In an embodiment, the operator may initiate maintenance through a general instruction, after which the system automatically selects an optimal time frame based on the combined risk factors and initiates the maintenance activity during that time frame without requiring further operator input.

In a more advanced embodiment, the system itself detects the availability of maintenance activities, such as newly released software patches. Without requiring explicit operator involvement, the system calculates the combined risk factors, selects a suitable time frame, and fully plans and initiates the maintenance activity automatically.

In an embodiment, the maintenance activity is scheduled to be initiated at the selected future time frame. The embodiment comprises monitoring of performance metric during and/or before scheduled maintenance; where the system detects whether the currently planned time frame remains acceptable based on real-time performance metric data. If the risk factors for the current time frame increase beyond acceptable thresholds, the system reports this change to the operator and proposes an alternative time frame. The operator may then evaluate the suggestion and make a decision on how to proceed. In an embodiment, the maintenance activity is paused or terminated automatically, e.g., without operator involvement.

Further embodiments may involve coordinating multiple maintenance tasks. If multiple independent maintenance tasks are pending, such as hardware upgrades, software patches, and database optimizations, the system may combine or reorder these tasks by evaluating the risk factors associated with each task. For example, smaller tasks may be grouped together into a single time frame to reduce disruptions, while larger tasks may be spread across different time frames to prevent cumulative risks.

The system may also dynamically adapt scheduled maintenance activities in response to changing conditions. If system performance metrics deviate significantly from predictions, leading to an increase in risk factors, the system may re-evaluate the scheduled time frame and reschedule the maintenance activity to a more suitable window. In some embodiments, this process occurs automatically, whereas in others, the system notifies an operator before proceeding with rescheduling. In an embodiment, the scheduling of the maintenance is dynamically adjusted based on changes in real-time performance metrics.

In certain embodiments, external data is also integrated into the risk factor calculations. For example, the system may take into account calendar data or schedules of third-party services, such as planned network downtimes or infrastructure upgrades. This additional information may influence the time frame selection.

### Example

An example system may comprises the following components:
Data Collection Module: This component gathers both historical and real-time usage data, e.g., at the infrastructure and/or application levels. Its primary function is to collect and store data related to gather and store historical and real-time data performance metrics related to infrastructure and business application usage. The data collected may include: CPU usage, transaction throughput, response times, and the number of users. This data may be stored as a time series and may be normalized, e.g., within a range of 0 to 1. For example, the normalized values 0 and 1 may correspond to the minimum and maximum values of the collected performance metric. The module may also store the absolute numeric values for the states represented by 0 and 1. Additionally, it may apply filters, e.g., to remove outliers or irrelevant data. This module owns and manages the collected data.

Compliance Metric Engine: This component calculates a potential compliance metric, e.g., ranging from 0 to 1 for several performance requirements. The primary function of this engine is to evaluate the potential impact on performance requirements. It uses the data provided by the Data Collection Module to determine how close the system is to violating a performance requirement, such as response time thresholds. It also takes into account quota guarantees, such as the number of supported users. The performance requirements, which are defined and provided by human operators, form the primary input for this engine.

Impact Factor Engine: This component quantifies the impact, e.g., as a value ranging from 0 to 1, that a particular maintenance activity will have on a performance requirement. The engine is responsible for mapping maintenance activities to the performance requirements they could potentially affect. This mapping process may be manually configured, derived from historical data, or estimated using machine learning techniques or LLMs.

Predictive Analytics Engine: This component uses the calculated data to derive a recommendation in the form of a time series. It integrates time series data from the Compliance Metric Engine with the Impact Factor Engine and incorporates a preconfigured factor to weight different performance requirement relative to one another. By combining these dimensions, it calculates an overall impact time series, e.g., a combined risk time series. Additionally, the Predictive Analytics Engine can use live data from the Data Collection Module to assess whether the current impact is higher than usual at a given time.

Landscape Management Solution: This is the existing solution that operators currently use to execute maintenance tasks, now enhanced by integration with the Predictive Analytics Engine. The Landscape Management Solution interacts with the Predictive Analytics Engine, providing operation identifiers for tasks that need to be executed immediately, at a future time, or as part of a regular schedule. Based on the potential impact, the solution provides recommendations to the system operator, such as postponing the maintenance window or by selecting and recommending an alternative scheduled time.

The data collection module may collect data 24/7. For instance, it may collect data and finds out that there are, on average, 1000 users online at peak hours (3 pm to 5 pm), 500 users in regular hours (9 am to 3 pm and 5 pm to 11 pm), and only 100 users in the early morning hours (11 pm to 9 am). The module calculates that during peak hours the response time is 1.2 seconds, during regular hours it is 1.5 seconds, and during the early morning hours it is 1.8 second due to a different type of workloads executed at that time and reduction of used hardware resources.

The compliance metric engine may engine checks the performance requirements to find a requirement of a maximum response time of 2 seconds and a guarantee of 1000 Users to be served.

For the availability compliance factor we use the following formula: Active Users / Guaranteed Users. For the response time compliance factor we use the following formula: 1 - (R_guarantee-R_measured)/2. For example, we may obtain the following historic, average data.

| | Measured Performance metric | | Compliance Factors | |
|---|---|---|---|---|
| | Active Users | Response Time | Availability Factor | Response Time Factor |
| regular hours | 500 | 1,5 | 0,5 | 0,75 |
| morning hours | 100 | 1,8 | 0,1 | 0,9 |
| peak hours | 1000 | 1,2 | 1 | 0,6 |

The Impact factor Engine knows that a rolling server reboot typically reduces the number of users served by 250. For example, the availability factor this translates in a factor of 1,3. That if *x* is the availability compliance factor without maintenance, then it is expected that availability compliance factor with maintenance is 1,3x. It also knows from past data that during a server reboot, the systems response time is reduced by 1s. Here the response time compliance factor increases with 0,5.

The table below summarizes how the compliance factor changes during maintenance. In general, for each compliance factor, a function is defined taking one or more impact parameters. The impact parameters may be obtained using statistical regression. In this example, each compliance factor has one parameter, but multiple parameters are possible, e.g., to support general linear regression.

| | Impact parameter | Function |
|---|---|---|
| Availability | 1,3 | *x* → 1,3*x* |
| Response Time | 0,5 | *x* → *x +* 0,5 |

The Predictive Analytics Engine assigns a weight of 0.7 to uptime and 0.3 for response time related performance requirement and brings together the different factors. The expected impacts are based on the multiplication of the risk and compliance metrics. The Weighted impacts are multiplied with the weights in addition. The Overall Impact is the sum of the two weighted impacts.

The expected impact is calculated from the compliance metric and function above. The weighted impact is calculated by: Weight * Expected Impact

| | Compliance metrics | | Expected Impact | | Weighted Impact | | Overall Impact |
|---|---|---|---|---|---|---|---|
| | Availability Factor | Response Time Factor | Availability Impact | Response Time Impact | Availability Impact | Response Time Impact | |
| regular hours | 0,5 | 0,75 | 0,65 | 1,25 | 0,455 | 0,375 | 0,83 |
| morning hours | 0,1 | 0,9 | 0,13 | 1,4 | 0,091 | 0,42 | 0,511 |
| peak hours | 1 | 0,6 | 1,3 | 1,1 | 0,91 | 0,33 | 1,24 |

Based on these calculations, the Predictive Analytics Engine determines that the best time to perform the server reboot is during the morning hours when the calculated overall impact is the lowest also an performance requirement violation with regards to response time must be expected.

Figure 4 schematically shows an example of an embodiment of a method 400 for scheduling maintenance in a computer system. Method 500 may be computer implemented. The method improves adherence to one or more predefined system performance requirements. The method comprises:
- monitoring (410) performance metrics of the computer system, the performance metrics being associated with the one or more predefined system performance requirements, thus obtaining historic performance metric data,
- predicting (420) from the historic performance metric data, for a plurality of future time frames, a quantitative compliance metric indicating compliance with the one or more predefined system performance requirements,
- estimating (430) an impact of a proposed maintenance activity on the quantitative compliance metric for the plurality of future time frames,
- calculating (440), for each future time frame, a risk factor indicative of a likelihood of violation of each of the one or more predefined system performance requirements, the risk factor being based on the predicted quantitative compliance metric and the estimated impact of the proposed maintenance activity,
- computing (450), for each future time frame, a combined risk factor from the risk factor associated with the one or more predefined system performance requirements,
- obtaining (460) a selected time frame for performing the maintenance activity based on the combined risk factors,
- initiating (470) the maintenance activity in the selected time frame.

Many different ways of executing the method are possible, as will be apparent to a person skilled in the art. For example, the steps can be performed in the shown order, but the order of the steps can be varied, or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing one or more computers, e.g., a processor system, to perform an embodiment of method 400. The software may include only those steps taken by a particular sub-entity of the system. The software and/or other data according to an embodiment may be stored in a non-transitory storage medium, such as a hard disk, a floppy disk, a memory, an optical disc, read-only memory, random access memory, CD-ROMs, magnetic tape, optical data storage devices, etc. Transitory signals and carrier waves are excluded from non-transitory media.

The software may be sent as a transitory signal along a wire or wirelessly, e.g., sent as a transitory signal over a data network, e.g., the Internet. For example, signals and/or carrier waves may serve as a transitory medium for carrying information. For example, a modulated electromagnetic wave may carry a signal bearing the software and/or other data according to an embodiment.

The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, code intermediate between source and object code, such as partially compiled code, or in any other form suitable for use in the implementation of an embodiment of the method. An embodiment relating to a computer program product comprises computer-executable instructions corresponding to each of the processing steps of at least one of the methods set forth. These instructions may be subdivided into subroutines and/or be stored in one or more files that may be linked statically or dynamically. Another embodiment relating to a computer program product comprises computer-executable instructions corresponding to each of the devices, units, and/or parts of at least one of the systems and/or products set forth.

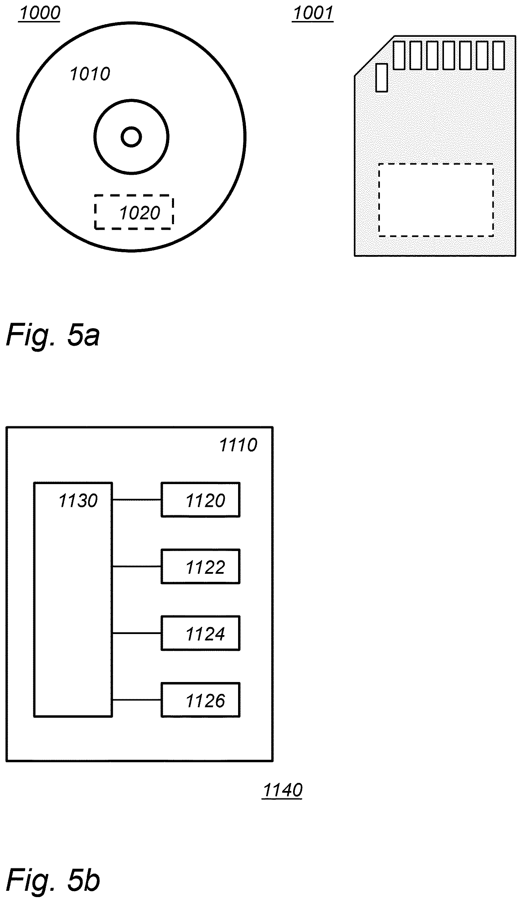

**Figure 5a** shows a computer-readable medium 1000 having a writable part 1010, and a computer-readable medium 1001 also having a writable part. Computer-readable medium 1000 is shown in the form of an optically readable medium. Computer-readable medium 1001 is shown in the form of an electronic memory, in this case a memory card. Computer-readable mediums 1000 and 1001 may store data 1020 wherein the data may indicate instructions which, when executed by a processor system, cause a processor system to perform an embodiment of a method for scheduling maintenance in a computer system, according to an embodiment. The computer program 1020 may be embodied on the computer-readable medium 1000 as physical marks or by magnetization of the computer-readable medium 1000. However, any other suitable embodiment is conceivable as well. Furthermore, it will be appreciated that, although the computer-readable medium 1000 is shown here as an optical disc, the computer-readable medium 1000 may be any suitable computer-readable medium, such as a hard disk, solid-state memory, flash memory, etc., and may be non-recordable or recordable. The computer program 1020 comprises instructions for causing a processor system to perform an embodiment of said method for scheduling maintenance in a computer system.

**Figure 5b** shows a schematic representation of a processor system 1140 according to an embodiment. The processor system comprises one or more integrated circuits 1110. The architecture of the one or more integrated circuits 1110 is schematically shown in Figure 5b. Integrated circuits 1110 comprises a processing unit 1120, e.g., a processor, a CPU, for running computer program components to execute a method according to an embodiment and/or implement its modules or units. Integrated circuits 1110 comprises a memory 1122 for storing programming code, data, etc. Part of memory 1122 may be read-only. Integrated circuits 1110 may comprise a communication element 1126, e.g., an antenna, connectors, or both, and the like. Integrated circuits 1110 may comprise a dedicated integrated circuit 1124 for performing part or all of the processing defined in the method. Processing unit 1120, memory 1122, dedicated IC 1124 and communication element 1126 may be connected to each other via an interconnect 1130, such as a bus. The processor system 1140 may be arranged for contact and/or contactless communication, using an antenna and/or connectors, respectively.

For example, in an embodiment, processor system 1140, e.g., a maintenance method scheduling device or system, may comprise a processor circuit and a memory circuit, the processor being arranged to execute software stored in the memory circuit. The memory circuit may be a ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processing unit 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (400) for scheduling maintenance in a computer system, the method being configured to improve adherence to one or more predefined system performance requirements, the method comprising:
- monitoring (410) performance metrics of the computer system, the performance metrics being associated with the one or more predefined system performance requirements, thus obtaining historic performance metric data,
- predicting (420) from the historic performance metric data, for a plurality of future time frames, a quantitative compliance metric indicating compliance with the one or more predefined system performance requirements,
- estimating (430) an impact of a proposed maintenance activity on the quantitative compliance metric for the plurality of future time frames,
- calculating (440), for each future time frame, a risk factor indicative of a likelihood of violation of each of the one or more predefined system performance requirements, the risk factor being based on the predicted quantitative compliance metric and the estimated impact of the proposed maintenance activity,
- computing (450), for each future time frame, a combined risk factor from the risk factor associated with the one or more predefined system performance requirements,
- obtaining (460) a selected time frame for performing the maintenance activity based on the combined risk factors,
- initiating (470) the maintenance activity in the selected time frame.

2. The method of Claim 1, wherein obtaining the selected time frame comprises automatically selecting a time frame for performing the maintenance activity based on the combined risk factors.

3. The method of any one of the preceding claims, wherein obtaining the selected time frame comprises selecting a time frame associated with a lower combined risk factor compared to one or more other time frames.

4. The method of any one of the preceding claims, comprising obtaining the predefined system performance requirements from one or more Service Level Agreement (SLA).

5. The method of any one of the preceding claims, wherein the computer system comprises a plurality of operational subsystems, and the method is applied to one or more of the operational subsystems.

6. The method of Claim 4, wherein each operational subsystem is configured to execute a plurality of applications.

7. The method of any one of the preceding claims, wherein the maintenance activity comprises one or more of: a rolling restart of system components, software updates, hardware replacements, configuration changes, or database optimizations.

8. The method of any one of the preceding claims, wherein the performance metrics include one or more of: CPU utilization, business transactions, response times, active user sessions, and request queue lengths.

9. The method of any one of the preceding claims, wherein the combined risk factor from the risk factor is a weighted sum of the risk factors.

10. The method of any one of the preceding claims, wherein monitoring performance metrics comprises collecting real-time data from one or more system components using sensors or monitoring software.

11. The method of any one of the preceding claims, wherein the predefined system performance requirements include one or more of response times, throughput targets, supported users.

12. The method of any one of the preceding claims, wherein estimating the impact of the proposed maintenance activity comprises:
- simulating the maintenance activity on a virtualized replica of the computer system, or
- deriving the estimate based on historical data from comparable maintenance performed on a comparable computer systems.

13. The method of any one of the preceding claims, wherein the scheduling of the maintenance is dynamically adjusted based on changes in real-time performance metrics.

14. A system comprising: one or more processors; and one or more storage devices storing instructions that, when executed by the one or more processors, cause the one or more processors to perform operations according to any one of Claims 1-13.

15. One or more non-transitory computer-readable media storing computer-executable instructions that, when executed by a computing system, cause the computing system to perform operations according to any one of Claims 1-13.
